# EUROPEAN PATENT APPLICATION

(11) **EP 1 640 900 A1**
(43) Date of publication of application: **29.03.2006**
(21) Application number: 05108287.3
(22) Date of filing: 09.09.2005
(51) Int. Cl.: G06Q 10/00

(54) **System and method for generating an orchestrated advertising campaign**

(30) Priority: 28.09.2004 US 950429
(71) Applicant: MICROSOFT CORPORATION, Redmond, Washington 98052-6399 (US)
(72) Inventor: Norrington, Trevor, 98052, Redmond (US); Chan, Kelvin, 98052, Redmond (US); Hurt, Michael W., 98052, Redmond (US); Tittle, Kenneth, 98052, Redmond (US); Horwart, Shawn, 98052, Redmond (US)
(74) Representative: Zimmer, Franz-Josef

(57) **Abstract**

A system and related techniques host and serve selective, orchestrated advertising campaigns and other content to users depending on contributing advertisers' campaign strategies as well as use interests, prior history or experiences. According to embodiments, users may navigate to a Web or other network site which contains or invokes ads or other media or content. When ad or other content is called, according to the invention in one regard a user identifier may be checked, to determine whether the user has subscribed to or had a profile established with the orchestrated ad platform of the invention. If the user does have a unique identifier associated with them, an ad engine may perform a lookup of the identifier against potential ad campaigns or delivery modes, to deliver a more coherent or orchestrated stream of ads or other media to the user Those selected campaigns may include for instance immersive delivery modes in which a number of ads related to an area of interest, such as cars and related services or foods and restaurants, may be delivered or streamed to the user's browser or other application at a comparatively high frequency or intensity. The sequence of that content may in one regard be conditioned on the user's browsing or other history, including topics of interest as expressed for example in prior search activity, in explicit questionnaires, or in prior purchase or shopping activity, as well as other behavioral patterns such as averaged length of browsing sessions, or other parameters. Because the experience which the user receives is targeted or tailored in nature, and in addition presents a set or series of content which is selected to reflect a meaningful relationship or theme, the effectiveness of the advertising or other content delivery campaign may be enhanced compared to undifferentiated delivery techniques.

## Description

### CROSS-REFERENCE TO RELATED APPLICATION

Not applicable.

### STATEMENT REGARDING FEDERALLY SPONSORED RESEARCH OR DEVELOPMENT

Not applicable.

### FIELD OF THE INVENTION

The invention relates to the field of networked media, and more particularly to a platform for generating a set of differentiated advertising content which may be selectively delivered to users in an orchestrated fashion, based on a coherent marketing strategy designed to meet user needs and interests with enhanced effectiveness.

### BACKGROUND OF THE INVENTION

The growth of Internet and other networked advertising services has increased in recent years, and the online advertising industry continues to expand. The effectiveness and reach of ad serving techniques and the strategies of ad campaigns have become more important as advertisers and Internet service providers proliferate, and reach greater numbers of consumers. However, even today most ad delivery strategies remain comparatively static and undifferentiated, and deliver mostly the same content to a broad cross-section of consumers, regardless of their differing needs or interests.

For instance, while some Internet search services have, for instance, implemented locality engines which detect a user's location through reverse IP lookups or other methods, even local content which is then delivered within an area is typically delivered to all users in that area in an undifferentiated manner. That is, in those and other scenarios, users are presented with the same selection of banner ads, popups, audio or video streams or other content regardless of their preferences, history or potential interest in related products or services.

An advertiser using a conventional delivery system therefore can not modulate or orchestrate the type, frequency, intensity or volume of advertising or other content for a user or group of users, based on user interests or needs, or related advertising opportunities. Moreover advertising approaches can not be selected from a set of diverse types of campaigns, to arrange an optimal sequence, depth or breath of advertising experience for a given user or group of users. Instead, the same or similar ads may be served to all users, or specified groups of users in a comparatively static fashion, and, in general, based on a product-centered rather than user-driven experience. Other shortcomings in conventional ad delivery platforms exist.

### SUMMARY OF THE INVENTION

The invention overcoming these and other problems in the art relates in one regard to a system and method for generating an orchestrated advertising campaign, in which a middle-tier ad engine or other control logic may detect participating users via an identifier and then serve differentiated ads or other content to users based on orchestrated, strategic campaigns designed to have the greatest amount of impact on the recipients based on an overall marketing strategy. In embodiments, a user may navigate to a Web site or other networked site which may call for banner ads, popups, streaming media or other content for insertion and delivery to the user's browser or other application or tool. However, according to embodiments of the invention a check may be made for a user identifier indicating that the recipient may wish to, or be a candidate for orchestrated ad delivery, for instance based on past user behavior including visited site history, site dwell times, past transaction history or other factors. According to embodiments in one regard, the ad engine may access a content database hosting a set of diverse ad campaigns and associated content, each designed for different tailored experiences such as immersive or "surround" type advertising or content, a sequence of logically related content, or other campaign themes or delivery strategies. An ad campaign or type of campaign may be selected based on the destination Web site, as well as the user's identifier and history and advertiser campaign selections or strategies. That selectable, orchestrated content may then be served to the Web site or to the user, to experience a cohesive set of media or content based on those dynamic variables. Thus a user who visits a travel Web site who may, for example, have recently purchased and taken trips to tropical destinations may be presented with a series of airline, hotel and restaurant advertisements for coastal destinations. The inventive platform therefore may assess the nature, history, length and purposes of a user's typical online session for a given Web site or other destination and then identify the sequence, frequency, duration and mix of ads or other content that may have the greatest potential impact on the user's attention and interests, within the context of that session.

### BRIEF DESCRIPTION OF THE DRAWINGS

Fig. 1 illustrates an overall environment in which a system and method for generating an orchestrated advertising campaign may operate, according to embodiments of the invention.

Fig. 2 illustrates a content store including orchestrated ad content, and generalized ad content according to embodiments of the invention.

Fig. 3 illustrates a set of selectable orchestrated modes which may be used to serve advertising or other content, according to embodiments of the invention.

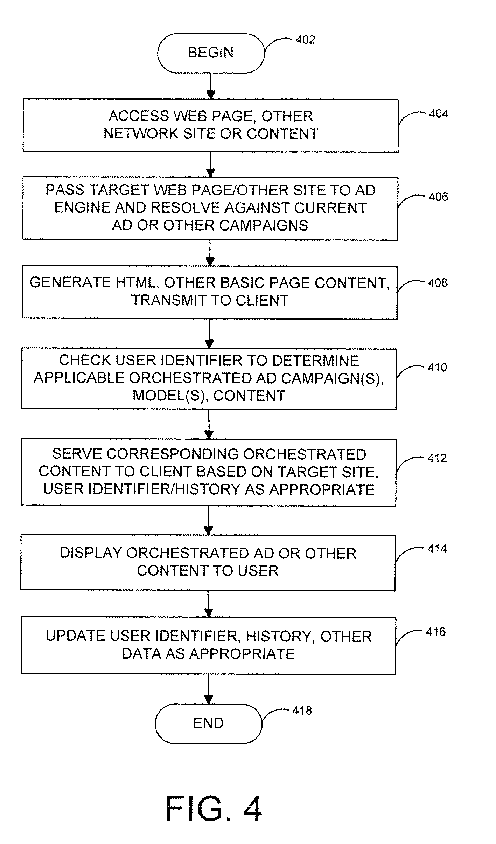

Fig. 4 illustrates a flowchart of overall orchestrated advertising processing, according to embodiments of the invention.

### DETAILED DESCRIPTION OF EMBODIMENTS

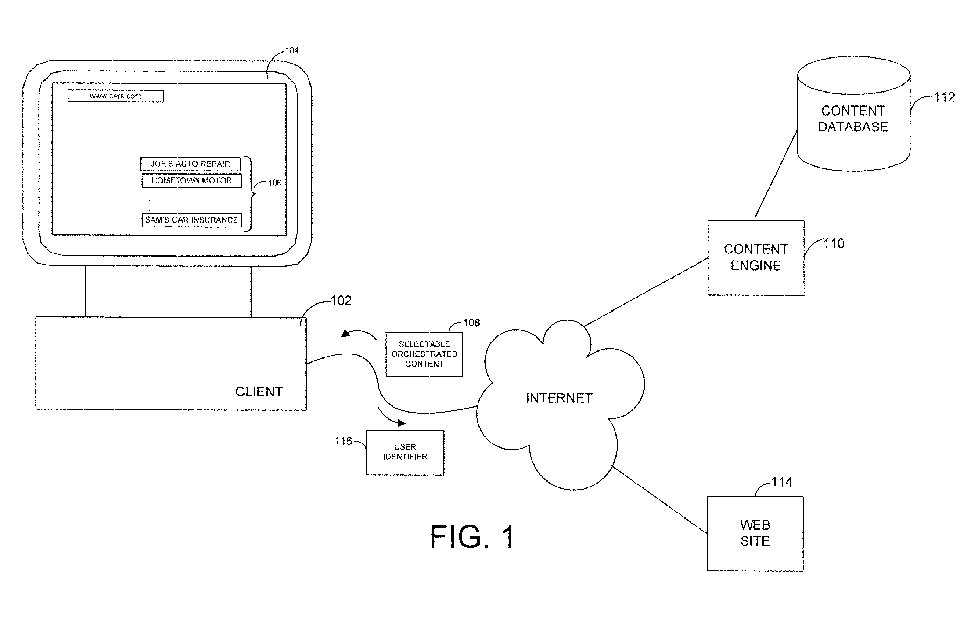

Fig. 1 illustrates an environment in which a system and method for generating an orchestrated advertising campaign may operate, according to embodiments of the invention. As illustrated in that figure, a user may operate a client 102 including a user interface 104, such as a graphical user interface or other interface, to access networked sites and content, such as Web sites on the Internet or others. The client 102 may be or include, for instance, a computer, a network-enabled cellular telephone, a network-enabled personal digital assistant or other client, machine or device which may be connected to Internet or other network connections via wired, wireless, optical or other connections or channels. The user may for example use client 102 to navigate and access a Web site 114 or other network sites, using a browser or other application or tool.

According to embodiments of the invention in one regard, when a user navigates to a Web site 114 or other Internet or other network site or destination, that site may present the user with a set of content, which may include for example text, images, audio or other media, for example encoded in hyper text markup language (HTML), extensible markup language (XML) or other code or formats. When a user accesses Web site 114 or other site or location, for instance by entering a universal resource locator (URL) or other network address or identifier, the fixed content for that page may be generated for transmission to client 102. According to embodiments of the invention, however, additional content or media may also be generated for transmission to the client and display in a set of configurable content slots 106, or other dynamic or selectable content areas in the user interface 104, browser or other application. The set of configurable content slots 106 may be or include, for instance, placeholders, slots or areas for the display of banner ads, streaming audio or video clips, flash animations or slide shows, or other content or media. That content or media may in embodiments be or include advertising content, such as advertisements for display on a Web page or other site.

More particularly, when a user navigates to Web site 114 or other location, Web site 114 may issue a call for a set of selectable orchestrated content 108 to a content engine 110, for instance via a transfer control protocol/Internet protocol (TCP/IP) or other procedure or call. According to embodiments of the invention in one regard, the content engine 110 may also receive, directly or indirectly, a user identifier 116 when the Web or other site is accessed, and the content for the page or site is being generated. In embodiments, the user identifier 116 may be or include, for example, a tracking or information object such as a cookie or other data or file which encodes information about the user and in cases, their browsing or transaction history. In embodiments the user identifier 116 may also include a profile generated by way of explicit user dialogues, or other feedback concerning browsing, transaction or other preferences.

Thus, when content engine 110 receives a request from Web site 114 to retrieve and transmit or serve advertisements or other media or content as part of selectable orchestrated content 108, the content engine 110 may analyze the accessed site and/or user identifier 116 to identify orchestrated advertising or other content, to deliver in the context of that site, the content supplier and that user session. The content engine 110 may thus, for example, determine that the user has navigated to a Web site related to car repairs or service, and/or that the user recently completed an automobile purchase or lease transaction by way of transaction history encoded in user identifier 116. User identifier 116 may likewise encode other user behaviors or preferences, such as an average dwell time during the user's recent or long term Web site visits, language or currency preferences, location or other parameters related to the user's behavior or history.

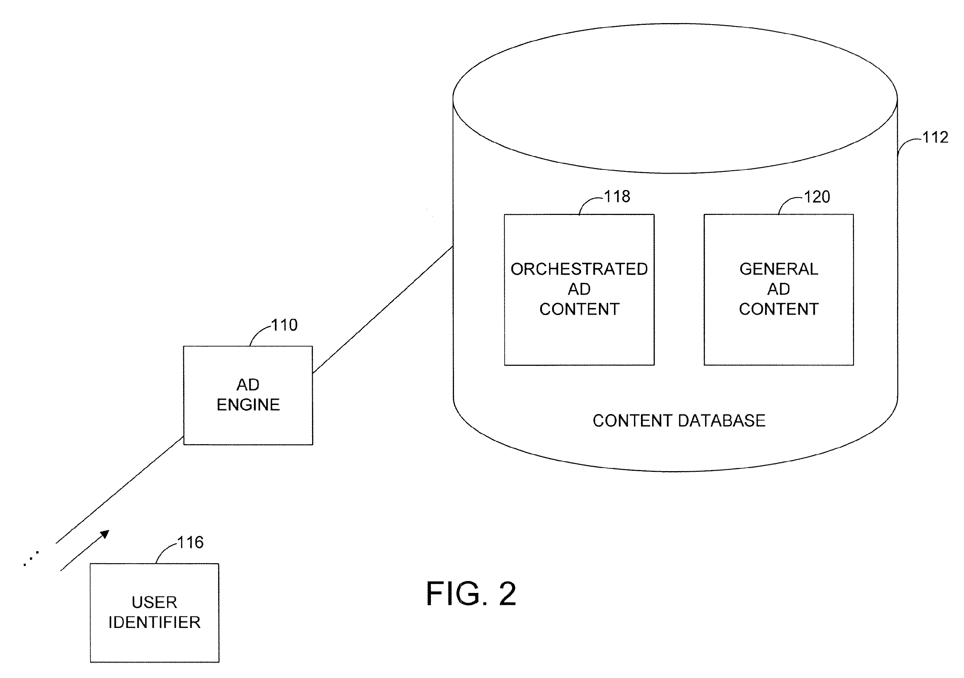

The content engine 110 may factor in the Web site 114 identification along with user identifier 116, as appropriate, to identify and generate optimized, orchestrated advertising or other content according to coordinated marketing strategies or campaigns, in differentiated fashion. The selectable orchestrated content 108 served according to that orchestrated plan may be hosted in, and retrieved from a content database 112, or other content store which may be asynchronously called to deliver to the user visiting the Web site 114, transparently and dynamically. As more particularly for instance illustrated in Fig. 2, the content database 112 may content at least both orchestrated ad content 118 as well as general ad content 120. Orchestrated ad content 118 may be accessed and served when the content engine 110 determines that the Web site 114 and/or user identifier 116 indicate that the user wishes to, or is a suitable candidate to receive targeted advertising or other campaign material. In other cases in which Web site 114 can not be verified as a participant in the content delivery platform of the invention, or the user is not identified as a candidate for or wishes to receive orchestrated marketing media, the content engine 110 may delivery general ad content 120, for instance to display in configurable content slots 106 or otherwise.

In embodiments of the invention in another regard, an advertiser or other content supplier or other who generates, supplies or manages the orchestrated ad content 118 to be hosted in content database 112 or otherwise may be given an option to customize or program the content to be delivered, based on a set of criteria or conditions, if desired. For example, the selection or delivery of orchestrated ad content 118 or parts thereof may be made dependent on usage by or specific to individual users or groups of users, or specified Web sites or sequences of Web sites. The particular orchestrated ad content 118 may likewise be conditioned on the occurrence of specified events such as purchase transactions, or based on other variables or data. For example, users whose browsing history indicates a relatively short dwell time on given Web sites or categories of Web sites may be served more concise ads or shorter audio or video clips, as part of orchestrated ad content 118.

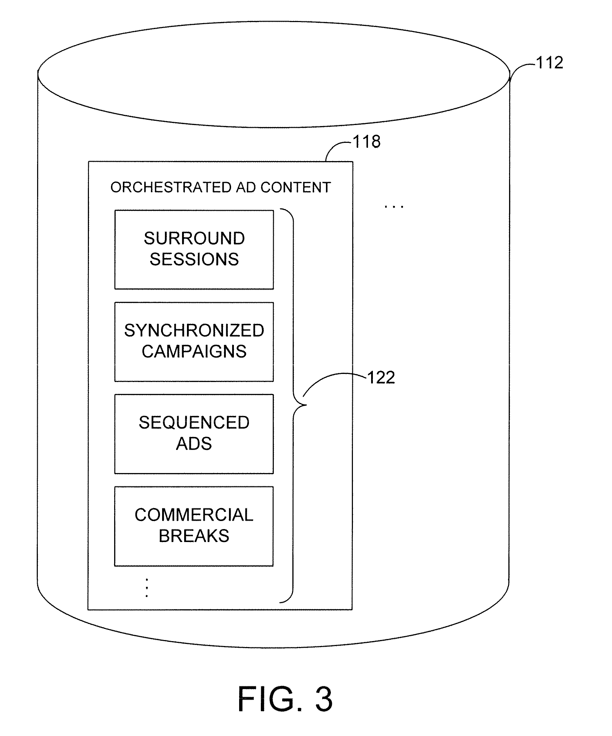

In the case when the Web site 114 and/or user identifier 116 indicate the delivery of orchestrated content, the content engine 110 may in embodiments, and as illustrated in Fig. 3, select a range of selectable orchestrated ad content 118 from a set of selectable orchestrated modes 122 for tailored delivery to that site and for that session. The set of selectable orchestrated modes 122 or strategies may be or include, for instance, advertising campaign or other modes, techniques or strategies designed to achieve defined marketing and informational objectives, and thereby enhance the user's media experience. For example and as shown, the set of selectable orchestrated modes 122 may be or include surround sessions, in which all available configurable content slots 106 are occupied by advertisements or content for a single vendor, or a group of related products or services. Other immersive or comprehensive campaign modes or techniques may be used when a surround-type or similar session is deployed, including for instance the playing of audio or video clips related to a single product, vendor or service, or related sources, products or services arranged in a coherent group.

Similarly, the set of selectable orchestrated modes 122 may likewise include modes or campaign types such as synchronized campaigns, in which a series or sequence of related advertisements or content that build a consistent storyline or message over a session, or series of sessions, may be presented. A further mode may include a sequenced ad format, in which the set of selectable orchestrated content 108 may vary as a function of the user's location in the purchase funnel or other transaction sequence. In such cases, for instance, the user may be presented with a set of banner ads in the configurable content slots 106 while selecting products from an online catalogue, but presented with flash animations or other rich media when the user has progressed to the purchase phase of a transaction sequence. A further campaign mode may include a commercial break, in which an entire page may be temporarily replaced with an HTML or other advertisement or content. Other and further modes, strategies, campaigns and sequences are possible. According to embodiments of the invention in general terms, because the selectable orchestrated content 108 seeks to maximize the impact or relevance of the advertising material or other content delivered to the user, the participating advertisers or other content suppliers may avoid wasteful content delivery and achieve more effective advertising results. Users may find the orchestrated content and media easier to interpret and more closely aligned with their interests and needs, thus also establishing a more positive base for future interactions.

The foregoing description of the invention is illustrative, and modifications in configuration and implementation will occur to persons skilled in the art. For instance, while the invention has generally been described in terms of advertising or other content which may be delivered from a unitary content database 112, in embodiments the selectable orchestrated content 108 may be served or transmitted from more than one ad source or content store, depending on implementation. Other hardware, software or other resources described as singular may in embodiments be distributed, and similarly in embodiments resources described as distributed may be combined.

Similarly, while the invention has in embodiments generally been described as involving the delivery of advertisements, coupons or other commercially related content, in embodiments other content or media, such as informational content such as news, sports, weather, market statistics or others may be transmitted as part of the selectable orchestrated content 108. Further, while the advertisements or other content hosted in content database 112 has generally been described as being contributed by commercial entities on a paid-subscription basis, in embodiments advertising or other content may be sourced from commercial or other entities on a non-paid or non-fee basis, such as through a free subscription program or otherwise. The scope of the invention is accordingly intended to be limited only by the following claims.

## Claims

1. A system for generating selectable orchestrated content for delivery via a network, comprising:
an interface to a client to receive an access request to a network site; and
a content engine, the content engine communicating with the interface, the content engine generating orchestrated content for delivery in connection with the network site based an identification of the network site and a user identifier.

2. A system according to claim 1, wherein the network site comprises a Web page.

3. A system according to claim 1, wherein the client comprises at least one of a computer, a network-enabled personal digital assistant and a network-enabled cellular telephone.

4. A system according to claim 1, wherein the orchestrated content comprises a set of advertising campaigns.

5. A system according to claim 4, wherein the set of advertising campaigns comprises at least one of a maximum exposure session, a synchronized advertising campaign and sequenced advertising formats.

6. A system according to claim 1, wherein the user identifier comprises at least one of a tracking object and a user-inputted profile.

7. A system according to claim 1, wherein the orchestrated content is stored in a content store.

8. A system according to claim 1, wherein the orchestrated content is selectively displayable in a browser.

9. A system according to claim 8, wherein the set of orchestrated content comprises a set of called advertisements related to associated products or services.

10. A system according to claim 1, wherein the set of called advertisements are contributed by a set of subscribing advertisers.

11. A method for generating selectable orchestrated content for delivery via a network, comprising:
receiving an access request to access a network site from a user; and
generating orchestrated content for delivery in connection with the network site based an identification of the network site and a user identifier.

12. A method according to claim 11, wherein the network site comprises a Web page.

13. A method according to claim 11, wherein the user accesses the network site via a client comprising at least one of a computer, a network-enabled personal digital assistant and a network-enabled cellular telephone.

14. A method according to claim 11, wherein the orchestrated content comprises a set of advertising campaigns.

15. A method according to claim 14, wherein the set of advertising campaigns comprises at least one of a maximum exposure session, a synchronized advertising campaign and sequenced advertising formats.

16. A method according to claim 11, wherein the user identifier comprises at least one of a tracking object and a user-inputted profile.

17. A method according to claim 11, wherein the orchestrated content is stored in a content store.

18. A method according to claim 11, wherein the orchestrated content is selectively displayable in a browser.

19. A method according to claim 18, wherein the set of orchestrated content comprises a set of called advertisements related to associated products or services.

20. A method according to claim 11, wherein the set of called advertisements are contributed by a set of subscribing advertisers.

21. A set of orchestrated content for delivery via a network, the orchestrated content being generated by a method comprising:
receiving an access request to access a network site from a user; and
generating orchestrated content for delivery in connection with the network site based an identification of the network site and a user identifier.

22. A set of orchestrated content according to claim 21, wherein the network site comprises a Web page.

23. A set of orchestrated content according to claim 21, wherein the user accesses the network site via a client comprising at least one of a computer, a network-enabled personal digital assistant and a network-enabled cellular telephone.

24. A set of orchestrated content according to claim 21, wherein the orchestrated content comprises a set of advertising campaigns.

25. A set of orchestrated content according to claim 24, wherein the set of advertising campaigns comprises at least one of a maximum exposure session, a synchronized advertising campaign and sequenced advertising formats.

26. A set of orchestrated content according to claim 21, wherein the user identifier comprises at least one of a tracking object and a user-inputted profile.

27. A set of orchestrated content according to claim 21, wherein the orchestrated content is stored in a content store.

28. A set of orchestrated content according to claim 21, wherein the orchestrated content is selectively displayable in a browser.

29. A set of orchestrated content according to claim 28, wherein the set of orchestrated content comprises a set of called advertisements related to associated products or services.

30. A set of orchestrated content according to claim 21, wherein the set of called advertisements are contributed by a set of subscribing advertisers.
